(19) Europäisches Patentamt / European Patent Office / Office européen des brevets

(11) **EP 3 279 010 B1**

(12) **EUROPEAN PATENT SPECIFICATION**

(45) Date of publication and mention
of the grant of the patent:
**29.07.2020 Bulletin 2020/31**

(51) Int Cl.:
***B60C 9/00*** *(2006.01)*     ***B60C 9/20*** *(2006.01)*

(21) Application number: **17178966.2**

(22) Date of filing: **30.06.2017**

(54) **CORD-RUBBER COMPOSITE AND PNEUMATIC TIRE**

SEIL-KAUTSCHUK-VERBUNDSTOFF UND LUFTREIFEN

COMPOSITION DE CAOUTCHOUC/FIL CÂBLÉ ET PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.08.2016 JP 2016151449**

(43) Date of publication of application:
**07.02.2018 Bulletin 2018/06**

(73) Proprietor: **Sumitomo Rubber Industries, Ltd.
Kobe-shi, Hyogo-ken (JP)**

(72) Inventor: **FUJISAWA, Koji
Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A2- 1 577 121**     **WO-A1-2016/124422**
**US-A- 5 410 868**     **US-A- 5 873 962**
**US-A1- 2012 312 441**     **US-A1- 2016 193 879**

**Description**

Technical Field

The present invention relates to a cord-rubber composite in which a plurality of steel cords are coated with topping rubber, and a pneumatic tire using the cord-rubber composite.

Background Art

A rubber product such as a pneumatic tire is often reinforced by a cord-rubber composite, for example, as disclosed in Japanese Patent Application Publication No. 2011-126338. For example, a cord-rubber composite comprises a cord array of parallel steel cords coated with unvulcanized topping rubber. Such cord-rubber composite is incorporated in a pneumatic tire as a ply of a tread reinforcing belt, a ply of a carcass and the like. The cord-rubber composite undergoes a vulcanization process, and the topping rubber is vulcanized and united with the steel cords. In order to improve durability of the rubber product, it is important to prevent separation between the steel cords and the topping rubber.

US 5 873 962 A discloses a cord-rubber composite comprising the features according to the preamble of claim 1.

US 5 410 868 A discloses a cord-rubber composite having features according to a related technology.

US 2016/193879 A1 discloses a cord-rubber composite comprising steal cords having a single twist structure and having such a cord count and such an average outer diameter per 5 cm width that a surface parameter given by the product of cord count, average outer diameter and pi is greater than 60 mm.

WO 2016/124422 A1 discloses a cord-rubber composite having features according to a related technology.

Summary of the Invention

Problems to be resolved by the invention

However, steel cords have poor adhesion to rubber as compared with organic fiber cords. Thereby, conventionally, there has been a demand for improvement of the adhesion between steel cords and topping rubber.

The present invention was made in view of the above, and a primary object of the present invention is to provide a cord-rubber composite and a pneumatic tire using the same, in which the adhesion between the steel cords and the topping rubber is improved.

This object is achieved by a cord-rubber composite comprising the features of claim 1.

According to one aspect of the present invention, the cord-rubber composite comprises:

a cord array of parallel steel cords, and
an unvulcanized topping rubber coating the cord array and having a complex elastic modulus E* of not less than 5 MPa and not greater than 20 MPa after vulcanization,
the cord array having a surface area parameter S (mm) of not less than 80 mm and not greater than 300 mm,
wherein the surface area parameter S (mm) is defined by the following expression:

$$S = D \times Pi \times E \, ,$$

wherein

E is a cord count of the steel cords per 5 cm width of the cord-rubber composite in a direction orthogonal to longitudinal directions of the steel cords, and
D is an average outer diameter (mm) of the steel cords per the 5 cm width.

In the cord-rubber composite according to the one aspect of the present invention, it is preferred that the steel cords include one or more steel cords composed of steel filaments twisted together.

According to another aspect of the present invention, a pneumatic tire comprises a tire constructional member formed from the cord-rubber composite according to the one aspect of the present invention.

Brief Description of the Drawings

Fig. 1 is a cross-sectional view of a pneumatic tire as an embodiment of the present invention.
Fig. 2 is a perspective partial view of an exemplary cord-rubber composite.
Fig. 3 is a cross-sectional partial view of the cord-rubber composite in Fig. 2.
Fig. 4 is a cross-sectional partial view of a cord-rubber composite as an embodiment of the present invention.

Description of the Preferred Embodiments

The cord-rubber composite according to the present invention is used in rubber products including pneumatic tires.

The pneumatic tire according to the present invention comprises a tire constructional member formed from the cord-rubber composite. The pneumatic tire can be embodied variously, for example, passenger car tires, motorcycle tires, heavy duty vehicle tires and the like.

Embodiments of the present invention will now be described in conjunction with accompanying drawings.

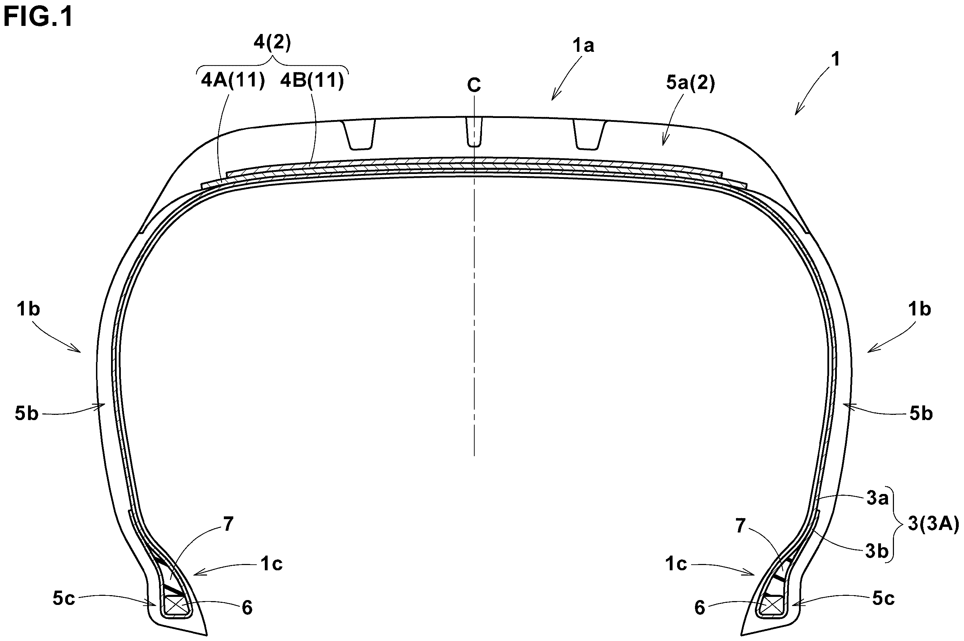

Fig. 1 shows a pneumatic tire 1 as an embodiment of the present invention. The pneumatic tire 1 in this embodiment is a radial tire for a passenger car.

The pneumatic tire 1 is composed of various tire constructional members 2 including a carcass 3, a belt 4, a tread rubber 5a, sidewall rubbers 5b, bead rubbers 5c, bead cores 6, and bead apex rubbers 7.

The carcass 3 is composed of at least one carcass ply 3A of carcass cords (in this embodiment, only one carcass ply). The carcass ply 3A extends between the bead portions 1c through the tread portion 1a and the sidewall portions 1b and turned up around the bead core 6 in each bead portion from the axially inside to outside of the tire to form a pair of turned up portions 3b and a main portion 3a therebetween. For example, the carcass cords in the carcass ply 3A are arranged at an angle of from 80 to 90 degrees with respect to the tire equator c.

Between the main portion 3a and each of the turned up portions 3b of the carcass ply 3A, the bead apex rubber 7 is disposed so as to extend radially outwardly from the bead core 6.

The belt 4 comprises two cross plies 4A and 4B of parallel belt cords laid at, for example, an angle of 10 to 35 degrees with respect to the tire circumferential direction.

In the pneumatic tire 1 in this embodiment, each of the belt plies 4A and 4B is formed from the cord-rubber composite according to the present invention.

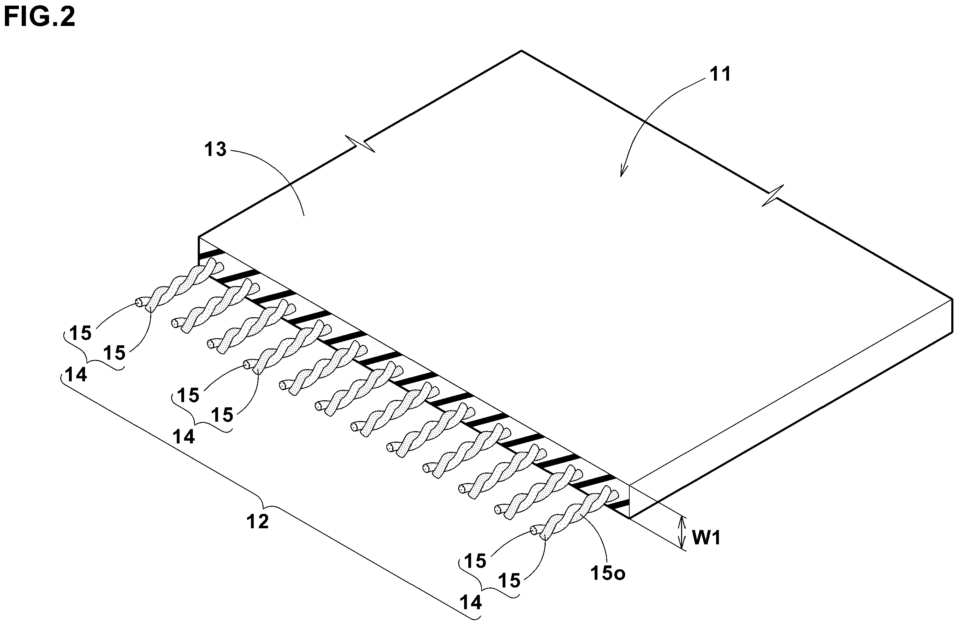

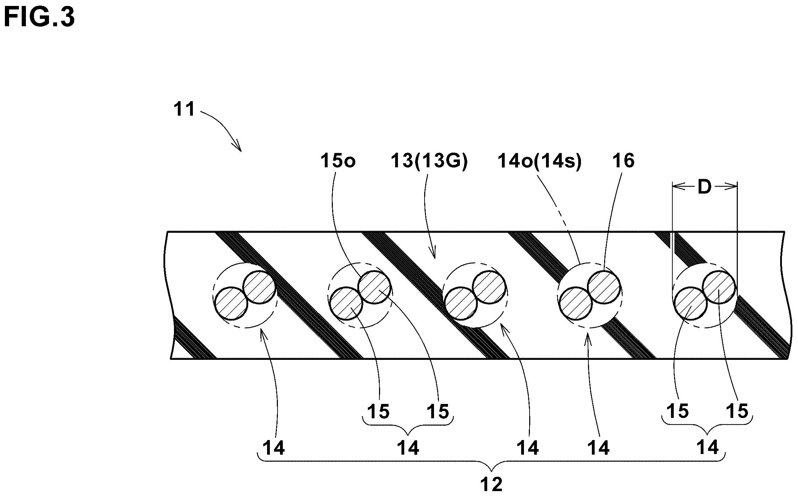

Figs. 2 and 3 show a cord-rubber composite 11 as an unclaimed exemplary embodiment.
The cord-rubber composite 11 is made up of a cord array 12 and topping rubber 13. The cord array 12 is composed of a plurality of steel cords 14 arranged parallel with each other. The lengths of the steel cords 14 are the same. The cord array 12 is coated with the topping rubber 13.
In the unvulcanized state of the tire 1, the topping rubber 13 is not yet vulcanized. In other words, the steel cords 14 are embedded in the unvulcanized topping rubber 13. The cord-rubber composite 11 is formed in the form of a sheet or strip. The thickness W1 of the cord-rubber composite 11 is set to be 0.5 to 3.5 mm.
In this specification, the term "unvulcanized" includes all states before reaching complete vulcanization, therefore, the so-called semi-vulcanized state is included in "unvulcanized".

The cord-rubber composite 11 as each of the belt plies 4A and 4B constitutes a green tire (not shown) together with other raw tire constructional members 2.
Through the process of vulcanizing the green tire, the topping rubber 13 of the cord-rubber composite 11 is vulcanized and united with steel cords 14, therefore the cord-rubber composite 11 becomes the belt ply in the pneumatic tire 1.

A surface area parameter S of the cord-rubber composite 11 is set to be not less than 80 mm.
Here, the surface area parameter S is defined by the following expression:

$$S = D \times Pi\, (= 3.14) \times E \qquad\qquad (1)$$

wherein

E is the cord count (count/5 cm) of the steel cords per 5 cm width of the cord-rubber composite in a direction orthogonal to the longitudinal directions of the steel cords, and
D is the outer diameter of the steel cords if the steel cords have the same outer diameter, or the average outer diameter of the steel cords if the steel cords have different outer diameters.

Thus, the term D X E in the expression (1) is equal to the total outer diameter of the steel cords existing in 5 cm width of the cord-rubber composite. The surface area parameter S represents the total length of the outer peripheries of the steel cords existing in 5 cm width of the cord-rubber composite.

Here, the outer diameter D of each steel cord is measured according to the "Testing methods for steel tire cords" specified in Japanese Industrial Standard (JIS) G3510.

In the cord-rubber composite 11, as the surface area parameter S is increased to at least 80 mm, the contact area between the steel cords 14 and the topping rubber 13 is increased, and the adhesion therebetween is improved.

However, if the surface area parameter S is too large, the weight of the cord-rubber composite 11 is increased, and the rolling resistance of the tire 1 is liable to deteriorate. Therefore, the surface area parameter S is not greater than 300 mm.

The individual steel cord 14 can be a monofilament cord made up of a single steel filament 15 or a multifilament cord made up of a plurality of steel filaments 15 twisted together.

Although all the steel cords 14 of the cord array 12 can be monofilament cords, it is preferable that the steel cords 14 of the cord array 12 include at least one multifilament cord, more preferably include a plurality of multifilament cords, and still more preferably all the steel cords 14 are multifilament cords in order to improve the adhesion between the steel cords 14 and the topping rubber 13 by the increased surface area of the multifilament cord and the concavity and convexity of the surface of the multifilament cord into which the topping rubber 13 can penetrate.

In the case of the steel cord 14 being a multifilament cord, a single twist structure (1 x N) is employed in an example, wherein a number N of filaments 15 are twisted together once. In other words, a number N of filaments 15 are laid helically in one layer around the center. By increasing the number N, it is possible to increase the adhesion between the steel cords 14 and the topping rubber 13. However, if the number N exceeds 10, there is a possibility that the outer diameter D of the steel cord 14 becomes excessively large. Therefore, the number N of the filaments 15 is preferably set to be not more than 10.
In the example shown in Figs. 2 and 3, the number N is two.

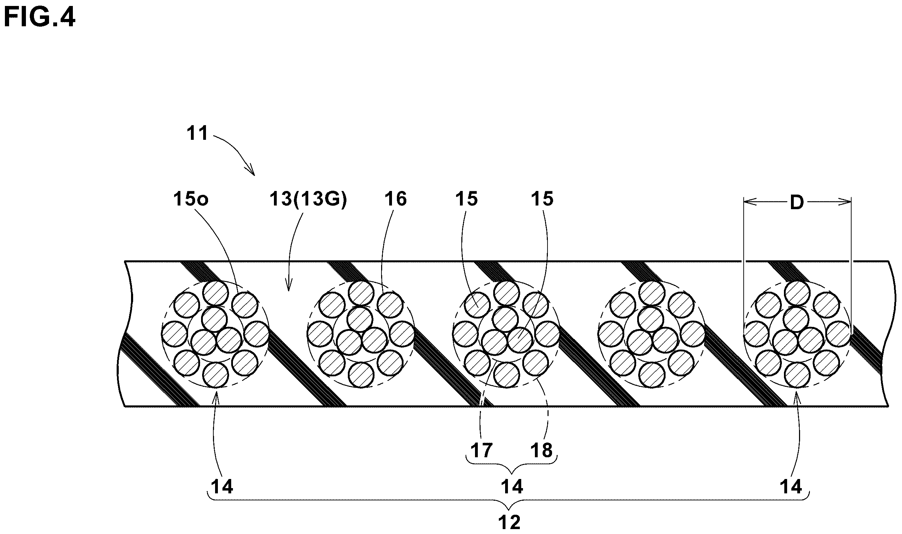

As another twist structure of the steel cord 14, a layered twists structure (N + M) is employed according to the invention. Fig. 4 shows a cord-rubber composite 11 as an embodiment of the present invention, wherein a 3+8 layered twists structure is employed in each steel cord 14.
In the layered twists structure (N + M), the cord is composed of a core of N filaments which are usually twisted together but may be not twisted, and a sheath of M filaments which are laid helically in one layer around the core.

Compared with the steel cord 14 of the single twist structure, the steel cord 14 of the layered twist structure can form a lot of recesses and gaps through which the topping rubber 13 can enter between the filaments 15. Thereby, the layered twist structure can further improve the adhesion between the steel cords 14 and the topping rubber 13 as compared with the single twist structure.

The number N of the filaments 15 of the core 17 and the number M of the filaments 15 of the sheath layer 18 can be arbitrarily set. However, it is preferable that the numbers N and M are set to be 2 to 10 in the same way as the number N of the filaments of the single twist structure.

In order to improve the adhesion between the steel cord 14 and the topping rubber 13, the surface 15o of each steel filament 15 can be coated with a plating layer (not shown). The plating layer is formed by, for example, brass plating, bronze plating, or the like.

The topping rubber 13 is a rubber compound 13G having a complex elastic modulus $E^*$ of not less than 5 MPa after vulcanization.

The complex elastic modulus $E^*$ is measured by using a viscoelastic spectrometer in accordance with Japanese Industrial standard JIS-K6394 under the following conditions:

  temperature: 30 degrees C
  frequency: 10 Hz
  initial strain: 10%
  amplitude: plus/minus 2%
  strain mode: tensile

Such topping rubber 13 can decrease difference in rigidity between the topping rubber 13 and the steel cords 14 after vulcanization. Thereby, the cord-rubber composite 11 can reduce stress concentration that is likely to occur at the interface 16 between the steel cords 14 and the topping rubber 13, therefore, it is possible to improve the adhesion between the steel cords 14 and the topping rubber 13.

In order to effectively improve the adhesion between the steel cords 14 and the topping rubber 13, the complex elastic modulus $E^*$ of the topping rubber 13 after vulcanization is preferably not less than 5.5 MPa, more preferably not less than 6 MPa. However, if the complex elastic modulus $E^*$ is too high, the viscosity of the topping rubber 13 during vulcanization becomes excessively high, and there is a possibility that the productivity is decreased. Therefore, the complex elastic modulus $E^*$ is set to be not greater than 20 MPa.

As described above, in the cord-rubber composite 11, the surface area parameter S is set be not less than 80 mm to increase the contact area between the steel cords 14 and the topping rubber 13, and the complex elastic modulus E* is set to be not less than 5 MPa to decrease the stress concentration which is likely to occur in the interface 16 between the steel cords 14 and the topping rubber 13. As a result, the cord-rubber composite 11 can be greatly improved in the adhesion between the steel cords 14 and the topping rubber 13.

In the pneumatic tire 1 in which the cord-rubber composite 11 is incorporated as the belt plies 4A and 4B, it is possible to prevent separation between the steel cords 14 and the topping rubber 13 over a long period of time. Therefore, a separation failure in the tread portion 1a can be effectively prevented to improve the durability of the tire.

The pneumatic tire 1 according to the present invention can include the cord-rubber composite 11 as the carcass ply 3A or other reinforcing plies (not shown) alternatively or in addition to the belt plies 4A and 4B. such tire 1 can be improved in the durability.

Incidentally, the cord-rubber composite 11 can be used for rubber products other than pneumatic tires.

While detailed description has been made of the preferred embodiments of the present invention, the present invention can be embodied in various forms without being limited to the illustrated specific embodiments.

Working Examples

Cord-rubber composites (working examples Ex.1 and Ex.2, comparative examples Ref.1 to Ref.4) having structures as shown in Fig. 2 were made according to the specification listed in Table 1.

Using each of the cord-rubber composites as the belt plies of the tire structure shown in Fig. 1 , a green tire was formed and vulcanized. Thereby, pneumatic tires (size 185/70R14 for passenger car) having the respective cord-rubber composites vulcanized and the tire internal structure shown in Fig. 1 were experimentally manufactured.

Common specifications of the steel cords are as follows:

structure: 1 x 2 single twist
outer diameter of filaments: 0.295 mm
outer diameter of cord: 0.59 mm

For each of the cord-rubber composites incorporated in the pneumatic tires, the adhesion between the steel cords and the topping rubber was evaluated. Test methods are as follows.

<Initial State Adhesion>

From each of the vulcanized tires, the belt plies were taken out. Then, according to a method of test for measuring the force required to separate, by stripping, two plies bonded with rubber specified in Japanese Industrial standard JIS K6256-1, the belt plies were separated with a stripping speed of 50 mm/min. From the separated belt plies, the coverage (%) of the surfaces of the steel cords with the topping rubber was determined. The results are shown in Table 1, wherein the larger the numerical value, the better the adhesion between the steel cords and the topping rubber.

<Aged State Adhesion>

By placing the vulcanized pneumatic tires in an environment of 70 degrees Celsius and of 95% relative humidity for 10 days, the tires were aged, and the belt plies were taken out from each of the aged tires. Then, as explained above, the coverage (%) was determined.

The results are shown in Table 1, wherein the larger the numerical value, the better the adhesion.

Table 1

|  | Ref. 1 | Ref. 2 | Ref. 3 | Ref. 4 | Ex. 1 | Ex. 2 |
|---|---|---|---|---|---|---|
| steel cord count E (/5cm) | 32 | 36 | 46 | 32 | 36 | 46 |
| surface area parameter S (mm) | 59 | 67 | 85 | 59 | 67 | 85 |
| complex elastic modulus E* (MPa) | 4.5 | 4.5 | 4.5 | 8.5 | 8.5 | 8.5 |
| adhesion (coverage %)<br>initial state<br>aged state | 50<br>20 | 60<br>40 | 70<br>50 | 50<br>30 | 90<br>80 | 100<br>90 |

From the test results, it was confirmed that the cord-rubber composites Ex.1 and Ex.2 had better adhesion between the steel cords and the topping rubber in both the initial state and the aged state as compared with the cord-rubber composites Refs. 1 to 4. Thus, in the pneumatic tires including the cord-rubber composites Exs.1 and 2 as the belt plies, it is possible to prevent the separation between the steel cords and the topping rubber over a long period of time, therefore, it was confirmed that the durability can be improved.

Reference Signs List

11    cord-rubber composite
12    cord array
13    topping rubber
14    steel cord

## Claims

1. A cord-rubber composite (11) comprising:

   a cord array (12) of parallel steel cords (14),
   wherein the steel cords (14) are composed of a core (17) of N filaments (15) and a sheath (18) of M filaments which are laid helically in a layer around the core (17), wherein the numbers N and M are set to be 2 to 10,
   **characterized in that**
   an unvulcanized topping rubber (13) coating the cord array (12) and having a complex elastic modulus E* of not less than 5 MPa and not greater than 20 MPa after vulcanization, wherein the complex elastic modulus E* is measured at 30 degrees Celsius,
   the cord array (12) having a surface area parameter S (mm) of not less than 80 mm and not greater than 300 mm, wherein the surface area parameter S (mm) is defined by the following expression:

$$S = D \times Pi \times E,$$

   wherein

   E is a cord count of the steel cords (14) per 5 cm width of the cord-rubber composite (11) in a direction orthogonal to longitudinal directions of the steel cords (14), and
   D is an average outer diameter (mm) of the steel cords (14) per the 5 cm width.

2. The cord-rubber composite (11) according to claim 1, wherein the steel cords (14) include a steel cord (14) composed of steel filaments (15) twisted together.

3. A pneumatic tire (1) comprising a tire constructional member formed from the cord-rubber composite (11) according to claim 1 or 2.

## Patentansprüche

1. Kord-Gummi-Verbundwerkstoff (11), umfassend:

   eine Kordreihe (12) paralleler Stahlkorde (14),
   wobei die Stahlkorde (14) aus einem Kern (17) mit N Filamenten (15) und einer Ummantelung (18) mit M Filamenten, die helikal in einer Lage um den Kern (17) herumgelegt sind, zusammengesetzt sind, wobei die Anzahlen N und M derart festgelegt sind, dass sie 2 bis 10 betragen,
   **dadurch gekennzeichnet, dass**
   ein unvulkanisierter Deckschichtgummi (13) die Kordreihe (12) bedeckt und einen komplexen Elastizitätsmodul E* von nicht weniger als 5 MPa und von nicht mehr als 20 MPa nach der Vulkanisierung aufweist, wobei der komplexe Elastizitätsmodul E* bei 30 Grad Celsius gemessen wird,
   die Kordreihe (12) einen Oberflächenparameter S (mm) von nicht weniger als 80 mm und nicht mehr als 300 mm aufweist, wobei der Oberflächenparameter S (mm) durch den folgenden Ausdruck definiert ist:

$$S = D \times Pi \times E,$$

wobei

E eine Kordzahl der Stahlkorde (14) pro 5 cm Breite des Kord-Gummi-Verbundwerkstoffs (11) in einer Richtung rechtwinklig zu Längsrichtungen der Stahlkorde (14) ist und
D ein mittlerer Außendurchmesser (mm) der Stahlkorde (14) pro 5 cm Breite ist.

**2.** Kord-Gummi-Verbundwerkstoff (11) nach Anspruch 1, wobei die Stahlkorde (14) einen Stahlkord (14) umfassen, der aus Stahlfilamenten (15) zusammengesetzt ist, die zusammen verdreht sind.

**3.** Luftreifen (1), ein Reifenkonstruktionselement umfassend, das aus dem Kord-Gummi-Verbundwerkstoff (11) nach Anspruch 1 oder 2 gebildet ist.

**Revendications**

**1.** Composite caoutchouc/câblés (11) comprenant :

un réseau de câblés (12) formé de câblés en acier parallèles (14),
dans lequel les câblés en acier (14) sont composés d'une âme (17) de N filaments (15) et d'une gaine (18) de M filaments qui sont posés en hélice dans une couche autour de l'âme (17), dans lequel les nombres N et M sont choisis de 2 à 10,
**caractérisé en ce que**
un caoutchouc d'enrobage non vulcanisé (13) revêt le réseau de câblés (12), avec un module d'élasticité complexe E* qui n'est pas inférieur à 5 MPa et qui n'est pas supérieur à 20 MPa après vulcanisation, ledit module d'élasticité complexe E* étant mesuré à 30 degrés Celsius,
le réseau de câblés (12) a un paramètre de superficie surfacique S (mm) qui n'est pas inférieur à 80 mm et qui n'est pas supérieur à 300 mm, dans lequel le paramètre de superficie surfacique S (mm) est défini par l'expression suivante :

$$S = D \times Pi \times E,$$

dans laquelle

E est un décompte de câblés des câblés en acier (14) pour 5 cm de largeur du composite caoutchouc/câblés (11) dans une direction orthogonale aux directions longitudinales des câblés en acier (14), et
D est un diamètre extérieur moyen (mm) des câblés en acier (14) pour 5 cm de largeur.

**2.** Composite caoutchouc/câblés (11) selon la revendication 1, dans lequel les câblés en acier (14) incluent un câblé en acier (14) composé de filaments en acier (15) torsadés ensemble.

**3.** Bandage pneumatique (1) comprenant un élément constitutif de pneumatique formé à partir du composite caoutchouc/câblés (11) selon la revendication 1 ou 2.

FIG.1

EP 3 279 010 B1

FIG.2

EP 3 279 010 B1

# FIG.3

**FIG.4**

EP 3 279 010 B1

**EP 3 279 010 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011126338 A
- US 5873962 A
- US 5410868 A
- US 2016193879 A1
- WO 2016124422 A1